(19) Europäisches Patentamt
European Patent Office
Office européen des brevets

(11) **EP 4 664 072 A1**

(12) **EUROPEAN PATENT APPLICATION**
published in accordance with Art. 153(4) EPC

(43) Date of publication:
**17.12.2025 Bulletin 2025/51**

(21) Application number: **23921234.3**

(22) Date of filing: **07.06.2023**

(51) International Patent Classification (IPC):
**G01C 21/26** (2006.01)

(52) Cooperative Patent Classification (CPC):
**G01C 21/26**

(86) International application number:
**PCT/JP2023/021248**

(87) International publication number:
**WO 2024/166407 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.02.2023 JP 2023019538**

(71) Applicant: **Pioneer Corporation
Tokyo 113-0021 (JP)**

(72) Inventor: **NAKAMURA, Takeshi
Kawagoe-shi, Saitama 350-8555 (JP)**

(74) Representative: **Rösler Rasch van der Heide &
Partner
Bodenseestraße 18
81241 München (DE)**

(54) **INFORMATION PROVIDING DEVICE, INFORMATION PROVIDING METHOD, PROGRAM, AND RECORDING MEDIUM**

(57) The invention provides a device, method, program, and recording medium for providing information about multiple recommended spots near a moving object, ensuring that the information is provided before the moving object reaches a branch point leading to the recommended spot.

When the recommended spot extractor extracts multiple recommended spots and the branch point detector detects multiple branch points, the controller prioritizes providing information for the recommended spot that is guided from the branch point, based on a shorter time from the current position of the moving object to the branch point. The controller also determines an information provision timing, based on the time needed to reach the branch point and the time required to provide spot information of the recommended spot, ensuring that the provision of the information is completed by the time the moving object arrives at the branch point to the recommended spot.

Fig .9

EP 4 664 072 A1

**Description**

[Technical Field]

The present invention relates to an information providing device, an information providing method, a program and a recording medium.

[Background Art]

In recent years, information providing devices with a concierge function have been put to practical use, extracting and providing various types of information that may be useful to an occupant traveling in a vehicle.

For example, as the concierge function of this kind, a technology has been proposed in which, if an advertising target point exists in a vicinity of a planned travel route of the vehicle, a branch point for entering the advertising target point from a road facing the advertising target point is identified, and if it is possible to output advertising information before the vehicle reaches the branch point, advertising information is output to a vehicle occupant (see, for example, Patent Literature 1).

[Related Art Literature]

[Patent Literature]

Japanese Unexamined Patent Application Publication No. 2020-165690

[Summary of Invention]

[Technical Problem]

However, one example of a problem with the technology described in the above-mentioned Patent Literature 1 is that when there are multiple advertising target points in the vicinity of the vehicle and multiple branch points are detected, or when the multiple advertising target points are detected beyond the branch point, it may not be possible to complete a provision of advertising information by the time the vehicle reaches the branch point, and a smooth route guidance to the advertising target point may not be possible.

The present invention has been made in view of the problem mentioned in the example above, and is the information providing device, an information providing method, a program, and a recording medium for providing information on multiple recommended spots existing in the vicinity of a moving object, which completes providing information on the recommended spots before the moving object arrives at the branch point to the recommended spots.

[Solution to Problem]

In order to solve the above problem, the invention described in claim 1 is an information providing device comprising:

a current position acquisition unit that acquires a current position of a moving object;
a recommendation spot extractor that extracts recommended spots that exist within a predetermined range from the current position and that are recommended to be visited by an occupant of the moving object;
a guidance route calculator that calculates a guidance route from the current position to the recommended spot;
a branch point detector that detects a branch point where a road on which the moving object is expected to travel and the guidance route branch;
a required time acquisition unit that acquires required time information regarding a required time for the moving object to arrive at the branch point; and
a controller that provides spot information to the occupant at least by voice at an information provision start timing determined based on the required time and an information provision time, which is a time required to provide the spot information of the recommended spot,
wherein the controller, upon detecting multiple branch points corresponding to the multiple recommended spots by the branch point detector, determines the information provision start timing for each spot information so that the provision of the spot information of the recommended spots corresponding to the guidance route branching from the branch point with a shorter required time is prioritized.

In order to solve the above problem, the invention described in claim 7 is an information providing method of an information providing device comprising a current position acquisition unit, a recommended spot extractor, a guidance route calculator, a branch point detector, a required time acquisition unit, and a controller, comprising steps of:

a first step in which the current position acquisition unit acquires a current position of a moving object.;

a second step in which the recommended spot extractor extracts recommended spots that exist within a predetermined range from the current position and that are recommended to be visited by an occupant of the moving object;

a third step in which the guidance route calculator calculates a guidance route from the current position to the recommended spot;

a fourth step in which the branch point detector detects a branch point where a road on which the moving object is expected to travel and the guidance route branch;

a fifth step in which the required time acquisition unit acquires required time information regarding a time required for the moving object to arrive at the branch point;

a sixth step in which the controller provides spot information to the occupant at least by voice at an information provision start timing determined based on a required time and an information provision time, which is the time required to provide the spot information of the recommended spot; and

a seventh step in which when multiple branch points corresponding to multiple recommended spots are detected by the branch point detector, the controller determines the information provision start timing for each spot information, so that a provision of the spot information of the recommended spots corresponding to the guidance route branching from the branch point with a shorter required time is prioritized.

In order to solve the above problem, the invention described in claim 8 is a program which causes a computer to execute an information providing method of an information providing device comprising a current position acquisition unit, a recommended spot extractor, a guidance route calculator, a branch point detector, a required time acquisition unit, and a controller, comprising the steps of:

a first step in which the current position acquisition unit acquires a current position of a moving object.;

a second step in which the recommended spot extractor extracts recommended spots that exist within a predetermined range from the current position and that are recommended to be visited by an occupant of the moving object;

a third step in which the guidance route calculator calculates a guidance route from the current position to the recommended spot;

a fourth step in which the branch point detector detects a branch point where a road on which the moving object is expected to travel and the guidance route branch;

a fifth step in which the required time acquisition unit acquires required time information regarding a time required for the moving object to arrive at the branch point;

a sixth step in which the controller provides spot information to the occupant at least by voice at an information provision start timing determined based on a required time and an information provision time, which is the time required to provide the spot information of the recommended spot; and

a seventh step in which when multiple branch points corresponding to multiple recommended spots are detected by the branch point detector, the controller determines the information provision start timing for each spot information, so that a provision of the spot information of the recommended spots corresponding to the guidance route branching from the branch point with a shorter required time is prioritized.

In order to solve the above problem, the invention described in claim 9 is a recording medium, which is computer-readable and non-transitory, containing a program which causes a computer to execute an information providing method of an information providing device comprising a current position acquisition unit, a recommended spot extractor, a guidance route calculator, a branch point detector, a required time acquisition unit, and a controller, comprising the steps of:

a first step in which the current position acquisition unit acquires a current position of a moving object.;

a second step in which the recommended spot extractor extracts recommended spots that exist within a predetermined range from the current position and that are recommended to be visited by an occupant of the moving object;

a third step in which the guidance route calculator calculates a guidance route from the current position to the recommended spot;

a fourth step in which the branch point detector detects a branch point where a road on which the moving object is expected to travel and the guidance route branch;

a fifth step in which the required time acquisition unit acquires required time information regarding a time required for the moving object to arrive at the branch point;

a sixth step in which the controller provides spot information to the occupant at least by voice at an information provision start timing determined based on a required time and an information provision time, which is the time required to provide the spot information of the recommended spot; and

a seventh step in which when multiple branch points corresponding to multiple recommended spots are detected by the branch point detector, the controller determines the information provision start timing for each spot information, so that a provision of the spot information of the recommended spots corresponding to the guidance route branching from the branch point with a shorter required time is prioritized.

[Brief Description of Drawings]

Fig. 1 illustrates a configuration of an information providing device according to an embodiment of the present invention.

Fig. 2 illustrates information stored in a recommended spot server connected to the information providing device according to the embodiment of the present invention.

Fig. 3 illustrates locations of recommended spots extracted by a recommended spot extractor of the information providing device according to the embodiment of the present invention.

Fig. 4 illustrates branch points detected by a branch point detector of the information providing device according to the embodiment of the present invention.

Fig. 5 illustrates an information provision time determined by a controller of the information providing device according to the embodiment of the present invention.

Fig. 6 illustrates information on the information provision time determined by the controller of the information providing device according to the embodiment of the present invention.

Fig. 7 illustrates the information provision time determined by the controller of the information providing device according to the embodiment of the present invention.

Fig. 8 illustrates information on the information provision time determined by the controller of the information providing device according to the embodiment of the present invention.

Fig. 9 illustrates a processing flow of the controller of the information providing device according to the embodiment of the present invention.

Fig. 10 illustrates the information provision time determined by the controller of the information providing device according to a variant of the present invention.

[Description of Embodiment]

An information providing device according to the present embodiment comprises: a current position acquisition unit that acquires a current position of a moving object, a recommended spot extractor that extracts a recommended spot that exists within a predetermined range from the current position and is recommended for an occupant of the moving object to visit, and a guidance route calculator that calculates a guidance route from the current position to the recommended spot, a branch point detector that detects a branch point where a road on which the moving object is expected to travel and the guidance route branch, a required time acquisition unit that acquires a time required for the moving object to arrive at the branch point, and a controller that provides spot information to the occupant at least by voice at an information provision start timing determined based on the required time and the information provision time, which is the time required to provide the spot information of recommended spots.

When multiple recommended spots are extracted in the recommended spot extractor and multiple branch points are detected in the branch point detector, the controller prioritizes providing information on the recommended spots to be guided by the branch point where the time required from the current position of the moving object to the branch point is short.

In addition, the controller determines the information provision start timing based on the time required from the current position to the branch point and the information provision time, which is the time required to provide the spot information of the recommended spot, so that a provision of the spot information of the recommended spot can be completed before the moving object arrives at the branch point to the recommended spot.

This allows the provision of the information on the recommended spots to be completed by the time the moving object arrives at the branch point for the recommended spot.

When the multiple recommended spots are detected for which the guidance route that branches at a same branch point is calculated, the controller of the information providing device according to the present embodiment determines the information provision start timing based on the time required and total information provision time for each recommended spot.

In other words, if the multiple recommended spots are detected that are guided by branching off the same branch point, the controller determines the information provision start timing and starts providing the spot information so that the provision of the spot information for the multiple recommended spots and a consideration of whether the occupant should visit the recommended spots can be completed before the moving object arrives at the branch point.

As a result, even if the multiple recommended spots are detected that is guided by branching off the same branch point, the occupant of the moving object can complete the provision of the information about the recommended spot and a decision of whether to visit the recommended spot before arriving at the branch point to the recommended spot, and therefore, when the decision is made to visit the recommended spot, the occupant can smoothly head to the recommended spot.

Embodiment

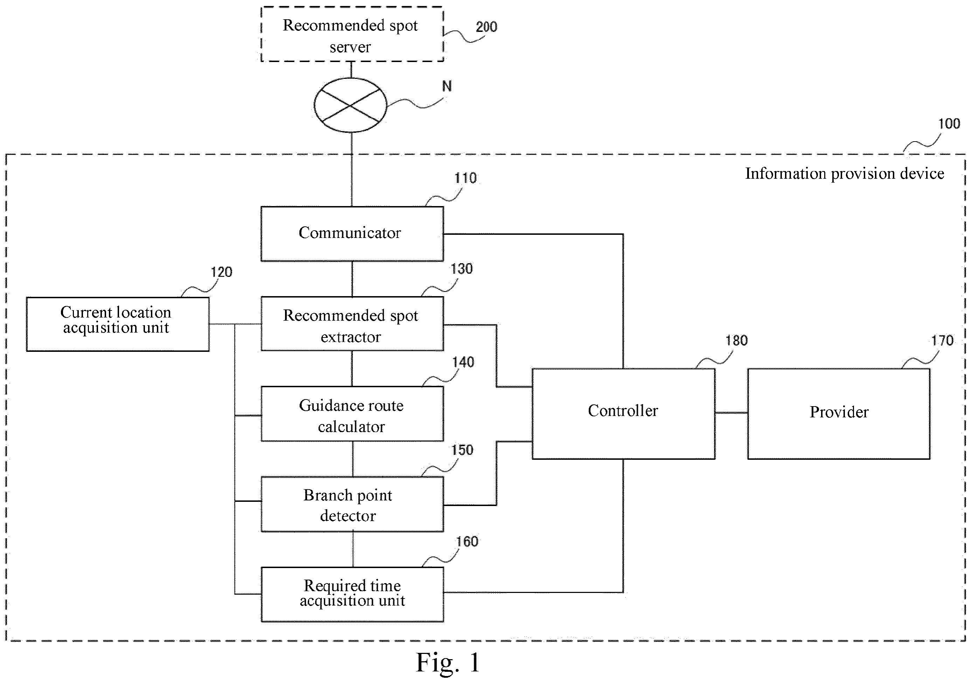

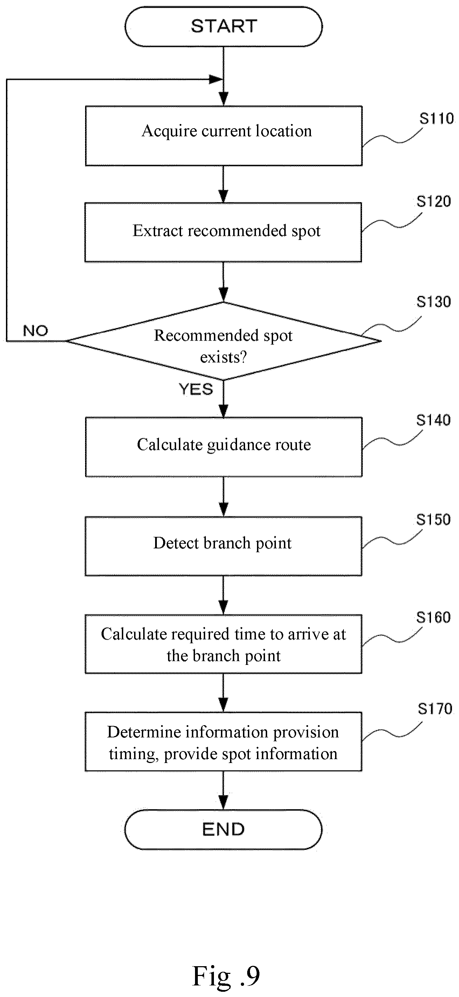

Fig. 1 and Fig. 9 are used to describe an information providing device 100 according to the present embodiment.

Configuration of the Information Providing Device 100

As illustrated in Fig. 1, the information providing device 100 at least comprises the following: a communicator 110, a current position acquisition unit 120, a recommended spot extractor 130, a guidance route calculator 140, a branch point detector 150, a required time acquisition unit 160, a provider 170, and a controller 180.

The communicator 110 is, for example, a known wireless communication module and functions as an interface for the information providing device 100 to communicate with a recommended spot server 200 via a network N.

Here, the network N is a network for mutual communication between the information providing device 100 and the recommended spot server 200, an example of which is the Internet network.

The recommended spot server 200 will be described further below.

The current position acquisition unit 120 acquires a current position of a moving object.

The current position acquisition unit 120 is, for example, a GPS receiving device that acquires the current position of the moving object equipped with the information providing device 100 and transmits the acquired current position information to the recommended spot extractor 130, the guidance route calculator 140, the branch point detector 150, and the time required acquisition unit 160, which are described below.

Here, vehicles, motorcycles, bicycles, and people can be the examples of the above-mentioned moving objects.

The recommended spot extractor 130 extracts recommended spots that exist within a predetermined range from the current position of the moving object and that are recommended for the occupant of the moving object to visit.

The recommended spot extractor 130 acquires information on the recommended spots from the recommended spot server 200 via the communicator 110 and extracts the recommended spots that exist within the predetermined range from the current position received from the current position acquisition unit 120.

Here, the recommended spot server 200 is described.

The recommended spot server 200 stores a list of the recommended spots such as commercial facilities, restaurants, and tourist spots that are recommended for the occupant of the moving object to visit, as well as spot information for each recommended spot.

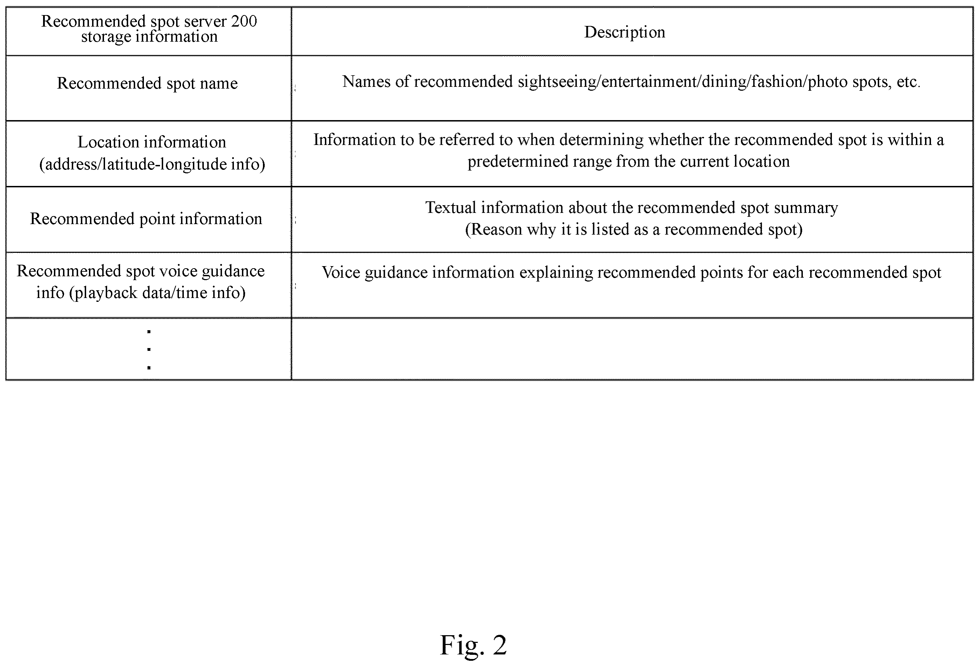

As illustrated in Fig. 2, examples of the spot information include recommended spot names, location information, recommended point information (highlights, recommended food, photo spots, and so on), and recommended spot voice guidance information (data for playback, playback time information).

The recommended point information, event calendar information, and so on registered in the recommended spot server 200 are updated with a latest information as appropriate.

Based on the location information of the recommended spots acquired from the recommended spot server 200, the recommended spot extractor 130 extracts, for example, recommended spots that are within 2 linear km of the current location of the moving object.

The recommended spot extractor 130 transmits the recommended spot names and the location information of extracted recommended spots to the guidance route calculator 140 and the controller 180 described further below.

If the recommended spots cannot be extracted in a vicinity of the moving object, the recommended spot extractor 130 transmits information to the guidance route calculator 140 and the controller 180 described further below, stating that no recommended spots could be extracted.

Here, the recommended spot extractor 130 may extract the recommended spots that exist within the predetermined range of a travel distance from the current position of the moving object to the recommended spot.

The guidance route calculator 140 calculates the guidance route from the current position of the moving object to the recommended spot.

The guidance route calculator 140 calculates the guidance route from the current position of the moving object to the recommended spot based on the current position information of the moving object received from the current position acquisition unit 120, the location information of the recommended spot received from the recommended spot extractor 130, and a map information stored in a memory not illustrated.

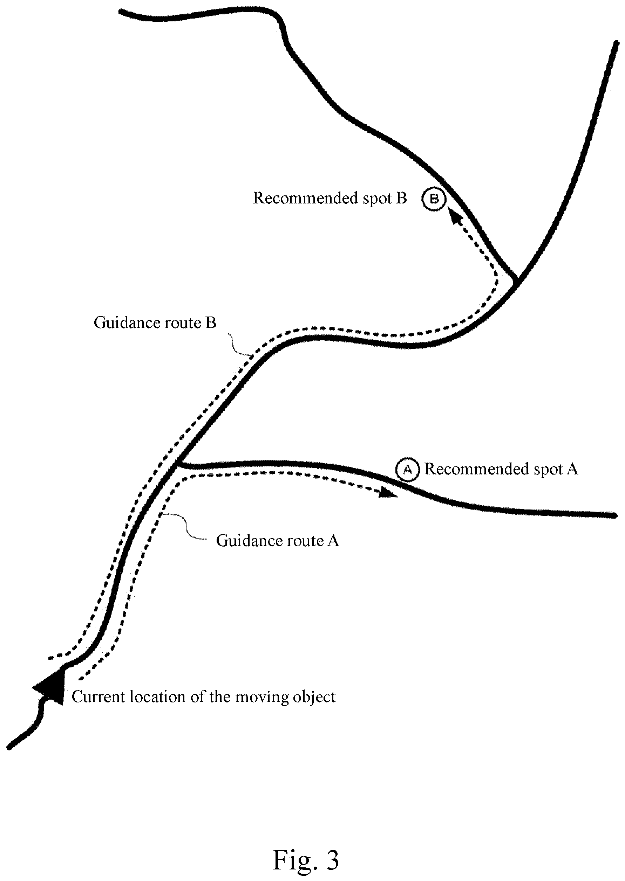

As illustrated in Fig. 3, when a recommended spot A and a recommended spot B are extracted in the recommended spot extractor 130, the guidance route calculator 140 calculates a guidance route A from the current position of the moving object to the recommended spot A, and a guidance route B from the current position of the moving object to the recommended spot B.

The guidance route calculator 140 transmits calculated guidance routes to the branch point detector 150 described below.

The branch point detector 150 detects a branch point where a road on which the moving object is expected to travel and the guidance route branch.

The road on which the moving object is expected to travel includes at least a road segment on which the moving object is currently travelling, and may also include the road on which the moving object is expected to travel after travelling on the road segment. The road on which the moving object is expected to travel may typically be the road corresponding to a route predetermined by the occupant of the moving object in the information providing device 100, or it may be the road that is estimated to have a high probability of travelling based on a departure date, time and place of departure of the current moving object and a past travel history of the moving object.

The branch point detector 150 detects the branch point, which is an intersection of the road to be entered to reach the recommended spot and the road that the moving object is expected to travel on, based on the guidance route received from the guidance route calculator 140 and the map information stored in the memory not illustrated.

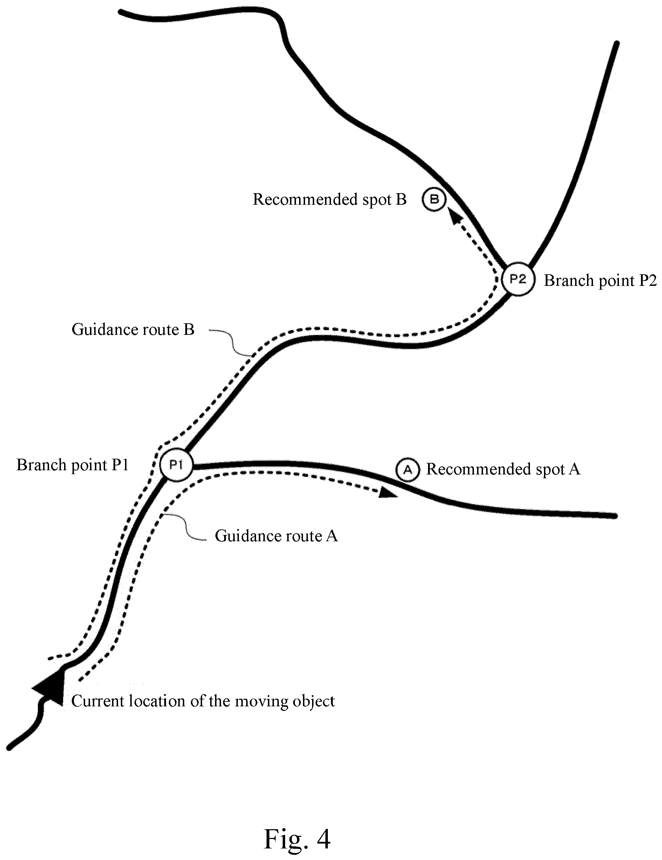

As illustrated in Fig. 4, the branch point detector 150 detects a branch point P1, which is the intersection of the road to be entered to reach the recommended spot A and the road where the moving object is expected to travel, in the guidance route A.

In addition, the branch point detector 150 detects a branch point P2, which is the intersection of the road to be entered to reach the recommended spot B and the road where the moving object is expected to travel, in the guidance route B.

The branch point detector 150 detects the branch point for each guidance route received from the guidance route calculator 140 and transmits the location information (intersection name, latitude and longitude information, and so on) of a detected branch point to the required time acquisition unit 160 described further below.

If the extracted recommended spot is located along the road which the moving object is expected to travel, the branch point detector 150 sets the location of the recommended spot as the branch point.

If the guidance route received from the guidance route calculator 140 is the route that leads the moving object back to the road it has traveled, the branch point detector 150 does not detect the branch point corresponding to that guidance route.

As a result, the spot information for the recommended spots where the moving object would have to return on the road it has traveled in order to arrive is excluded from a voice guidance.

In other words, the spot information for the recommended spots that can be reached efficiently by proceeding via the branch point on the road where the moving object is expected to travel in the future becomes a target of the voice guidance.

The required time acquisition unit 160 acquires required time information regarding the time required for the moving object to arrive at the branch point.

The required time acquisition unit 160 calculates a route distance from the current position of the moving object to the branch point based on the map information stored in the memory not illustrated, the current position information received from the current position acquisition unit 120, and the location information of the branch point received from the branch point detector 150.

The required time acquisition unit 160 calculates the time required to travel from the current position to the branch point based on a calculated route distance and, for example, an average travel speed of the moving object.

As illustrated in Fig. 4, when the branch point detector 150 detects the branch point P1 and the branch point P2, the required time acquisition unit 160 calculates a required time T1 from the current position of the moving object to the branch point P1 and a required time T2 from the current position of the moving object to the branch point P2.

The required time acquisition unit 160 transmits the acquired required time (required time T1, required time T2) to the controller 180 described further below.

Since the time required to reach the branch point varies depending on a traffic volume on the road on which the moving object is expected to travel, the time required is calculated by the required time acquisition unit 160 based on the traffic volume information on the road corresponding to a period until the moving object arrives at the branch point, and the calculation results are transmitted to the controller 180 described further below.

The provider 170 is, for example, a speaker, which outputs the voice guidance of the spot information of the recommended spots received from the controller 180 described further below.

The provider 170 may also be equipped with a display device (e.g., a liquid crystal panel) to display the spot information of the recommended spots received from the controller 180 described below.

The controller 180 controls operations of the entire information providing device 100 according to a control program stored in a ROM or other device not illustrated.

In the present embodiment, the controller 180 provides the spot information to the occupant at least by voice at information provision start timing determined based on the time required to reach the branch point and an information provision time, which is the time required to provide the spot information of the recommended spots.

When multiple branch points corresponding to multiple recommended spots are detected by the branch point detector 150, the controller 180 determines the information provision start timing for each spot information so that the spot information of the recommended spot corresponding to the guidance route branching from the branch point where the time required for the moving object to arrive at the branch point is short is provided ahead of other spots.

A method of determining the information provision start timing is described below.

Method 1 for Determining the Information Provision Start Timing

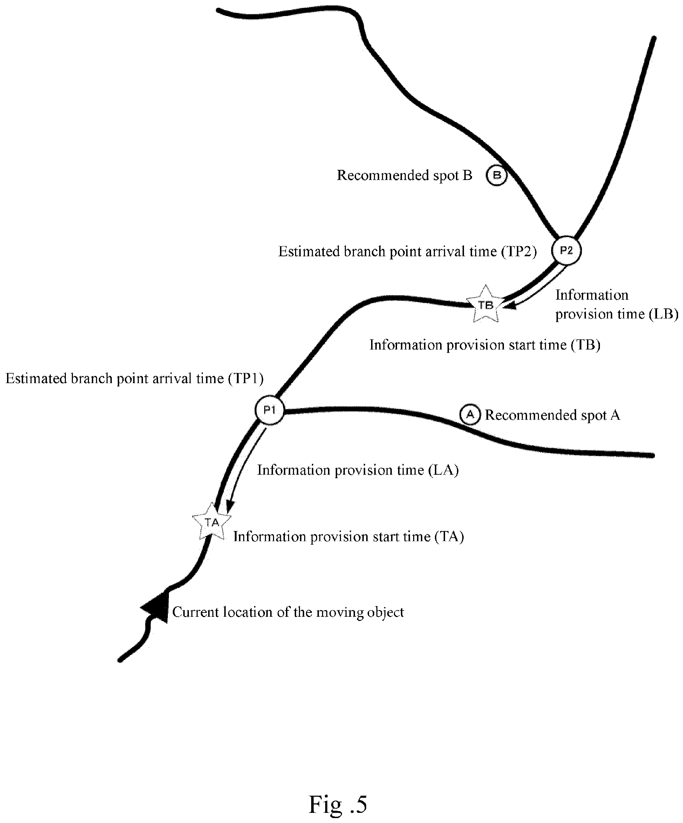

As illustrated in Fig. 5, the method of determining the information provision start timing is described using the example of a case in which the multiple branch points (branch point P1 / branch point P2) corresponding to the multiple recommended spots (recommended spot A / recommended spot B) are detected in the branch point detector 150.

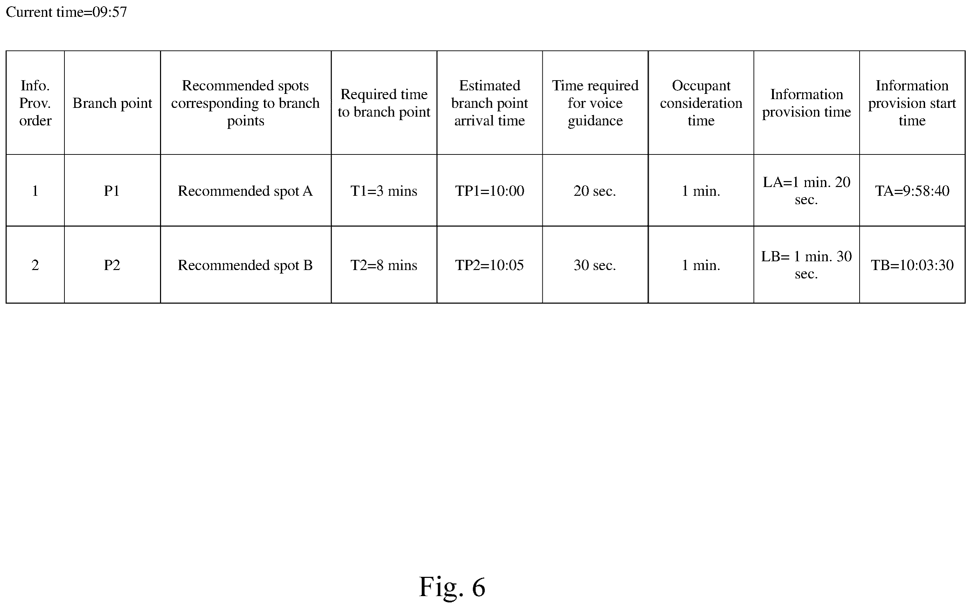

For example, as illustrated in Fig. 6, when the controller 180 receives the required time T1 (= 3 minutes) and the required time T2 (= 8 minutes) from the required time acquisition unit 160, the information provision start time for each recommended spot is determined so as to prioritize the provision of the spot information of the recommended spot A corresponding to the guidance route branching off from the branch point P1, which is the branch point with a shorter required time to reach the branch point.

Specifically, the controller 180 calculates an estimated branch point arrival time at which the moving object is expected to arrive at each branch point based on the required time received from the required time acquisition unit 160 and the current time, and determines the information provision start time based on a calculated estimated branch point arrival time and the information provision time, which is the time required to provide the spot information of the recommended spot.

The above-mentioned information provision time is described in the following.

The information provision time includes at least the time required for the voice guidance of the spot information and the time required for the occupant to consider whether to visit the recommended spot.

The information provision time is set to a specific time for each recommended spot.

Specifically, the controller 180 acquires voice guidance information (files for playback) for the recommended spots extracted by the recommended spot extractor 130 from the recommended spot server 200 to acquire the time required for the voice guidance for each recommended spot and the time required for the occupant to consider whether to visit the recommended spot.

Each of these two times is set appropriately for each recommended spot according to the length of the voice guidance and difficulty level of the consideration of whether to visit the recommended spot.

As illustrated in Fig. 6, the controller 180 calculates a total time required for the voice guidance of the spot information and the time required for the occupant to consider whether to visit the recommended spot (a consideration time for the occupant) for each recommended spot, and sets a calculated result as the information provision time for each recommended spot.

The time required for the occupant to consider whether to visit the recommended spot may include the time for the information providing device 100 to confirm the result of the consideration of the occupant in an interactive format.

The controller 180 calculates the information provision start time for each recommended spot based on the calculated estimated branch point arrival time and the information provision time.

The controller 180 determines the information provision start time to be the time that is the information provision time back from the estimated branch point arrival time so that the voice guidance of spot information and the consideration of whether the occupant should visit the recommended spot can be completed before the moving object arrives at the branch point.

Specifically, the information provision start time (TA) of the spot information of the recommended spot A can be calculated by substituting the estimated branch point arrival time at the branch point P1 (TP1) and the information provision time on the recommended spot A (LA) into an equation 1 shown below.

Information provision start time (TA) = estimated branch point arrival time (TP1) - information provision time (LA)    Equation 1

As illustrated in Fig. 6, for example, if the estimated branch point arrival time at the branch point P1 (TP1) is 10:00 and the information provision time on recommended spot A (LA) is 1 minute and 20 seconds, the information provision start time (TA) is 9:58 and 40 seconds.

The controller 180 calculates the information provision start time of the recommended spot B (TB) extracted in the recommended spot extractor 130 in the same way, and at the information provision start time determined for each recommended spot, transmits a voice signal of the voice guidance for the recommended spot acquired from the recommended spot server 200 to the provider 170.

The controller 180 is not limited to the method described above, as long as it can determine the information provision start timing based on the time required from the current position to the branch point and the information provision time, which is the time required to provide spot information on recommended spots.

For example, in the method for determining the information provision start time described above, the information provision start timing is determined by calculating the information provision start timing which starts the provision of the information, but the information provision start timing may be determined by calculating how many seconds later the information provision is to be started.

As illustrated in Fig. 6, if the controller 180 receives the required time T1 (3 minutes) from the current position to the branch point A and the information provision time LA (1 minute and 20 seconds), which is the time required to provide the spot information of the recommended spot A, then 1 minute and 40 seconds later (= 3 minutes - 1 minute and 20 seconds) is determined as a spot information provision start timing for the recommended spot A.

Alternatively, the spot to be reached in 1 minute and 40 seconds at the average travelling speed of the moving object may be calculated in advance, and the timing at which the moving object actually reaches the spot may be used as the spot information provision start timing for the recommended spot A.

Method 2 for Determining the Information Provision Start Timing

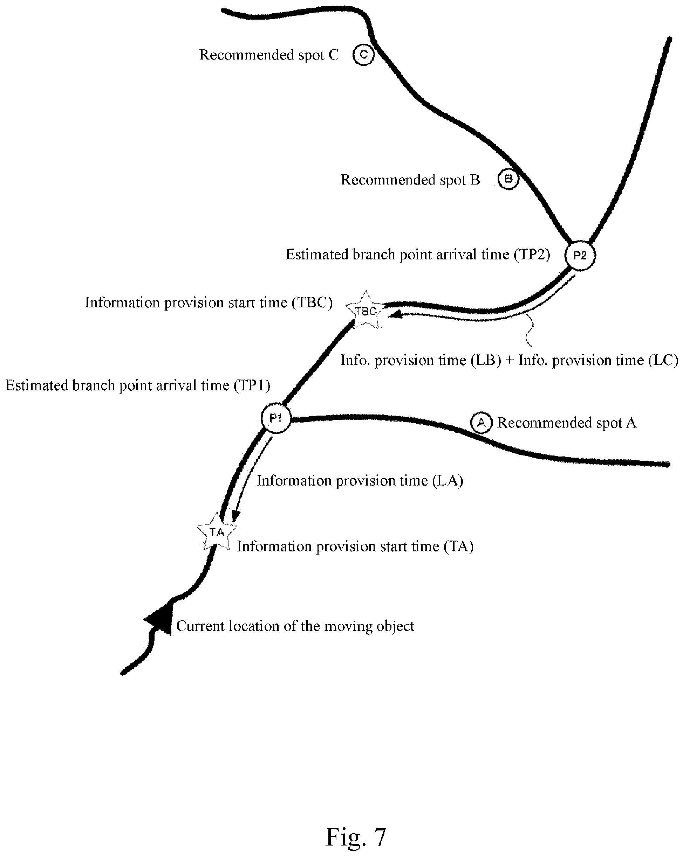

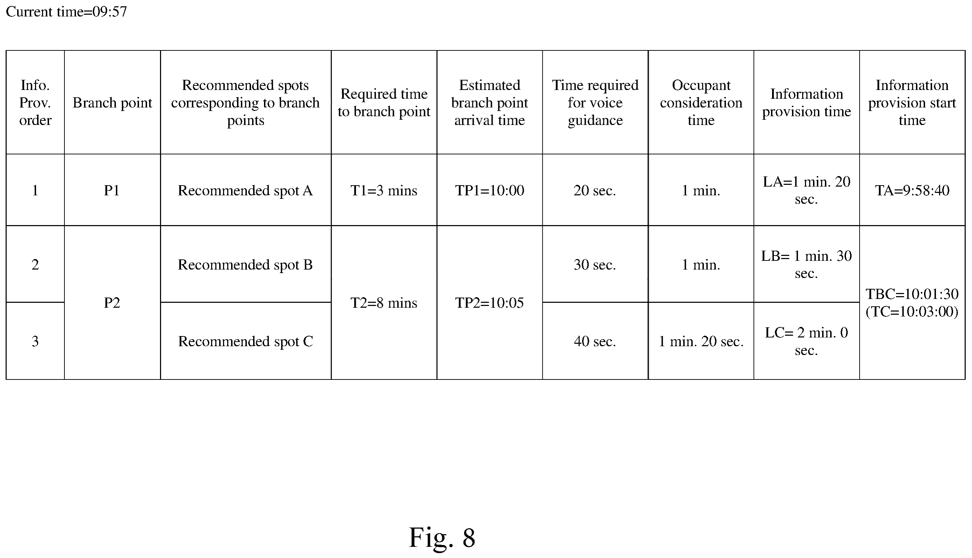

Fig. 7 and Fig. 8 are used to describe the method of determining the information provision timing when the multiple branch points corresponding to the multiple recommended spots are detected in the branch point detector 150, and moreover, when the multiple recommended spots are detected for which the guidance route that branches at the same branch point is calculated.

As illustrated in Fig. 7, the case in which the recommended spot A, for which the guidance route is calculated by branching off the branch point P1, and the recommended spots B and C, for which the guidance route is calculated by branching off the branch point P2, are detected, is illustrated as an example.

The method of determining the information provision timing for the recommended spot A is the same as the method described above, so the explanation is omitted.

If the multiple recommended spots are detected for which the guidance route that branches at the same branch point is calculated, the controller 180 determines the information provision start timing based on the time required and the total information provision time for each recommended spot.

As illustrated in Fig. 7, the controller 180 determines the information provision start time for recommended spots B and C (TBC) to be the time that is backward from an estimated time of arrival at the branch point P2 (TP2) by the total time of the information provision time of the recommended spot B (LB) and the information provision time of the recommended spot C (LC), so that the provision of information on the recommended spots B and C and the consideration of whether to visit the recommended spots by the occupant can be completed by the estimated branch point arrival time (TP2) at which the moving object arrives at the branch point P2.

Specifically, the information provision start time of spot information for recommended spots B and C (TBC) is calculated by substituting the estimated branch point arrival time at the branch point P2 (TP2), the information provision time of the recommended spot B (LB) and the information provision time of the recommended spot C (LC), into an equation 2 shown below.

Information provision start time (TBC) = estimated branch point arrival time (TP2) - (information provision time (LB) + information provision time (LC))    Equation 2

As illustrated in Fig. 8, for example, if the estimated branch point arrival time at the branch point P2 (TP2) is 10:05, the information provision time of the recommended spot B (LA) is 1 minute and 30 seconds, and the information provision time of the recommended spot C (LC) is 2 minutes and 0 seconds, the information provision start time (TBC) is 10:01 and 30 seconds.

The same applies when three or more recommended spots are detected for which the guidance route is calculated by branching off the branch point P2, and the time when the total information provision time for each recommended spot is backward from the estimated branch point arrival time at the branch point P2 (TP2) is determined as the information provision start timing.

If the multiple recommended spots are detected for which the guidance route that branches at the same branch point is calculated, the controller 180 may prioritize providing the spot information for the recommended spot with a shortest distance from the branch point to the recommended spot.

In other words, if the multiple recommended spots (recommended spot B and recommended spot C) for which the guidance route is calculated by branching off the branch point P2 are detected, then the controller 180 prioritize providing the spot information of the recommended spot B, which has a shorter distance of the guidance route from branch point P2 to the recommended spot, at the information provision start time (TBC).

As illustrated in Fig. 8, the controller 180 starts providing spot information on the recommended spot B at the above-mentioned information provision start time (TBC) and starts providing the spot information on the recommended spot C at the information provision time (TC).

Since the provision of the spot information on the recommended spots should be completed by the time the moving object arrives at the branch point to the recommended spot, the controller 180 may insert an interval of a predetermined time between pieces of the spot information in cases such as when spot information on the multiple recommended spots is output continuously.

In this case, the controller 180 determines the information provision start timing based on the time required from the current position to the branch point, the information provision time, and an interval time to be inserted.

Processing of Information Providing Device 100

Fig. 9 is used to describe a processing flow of the information providing device 100.

As illustrated in Fig. 9, the current position acquisition unit 120 acquires the current position information of the moving object (step S110) and moves a process to step S120.

The recommended spot extractor 130 extracts recommended spots that exist around the current position based on the current position information of the moving object acquired in step S110 (step S120).

The controller 180 determines whether the recommended spot that is recommended for the occupant of the moving object to visit has been extracted based on extraction results received from the recommended spot extractor 130 (step S130).

If the controller 180 receives information that no recommended spots have been extracted from the recommended spot extractor 130 ("NO" in step S130), the process is returned to step S110 to continue the process.

On the other hand, if the controller 180 receives a name of the recommended spot from the recommended spot extractor 130 and determines that the recommended spot has been extracted ("YES" in step S130), the process is moved to step S140.

The guidance route calculator 140 calculates the guidance route from the current position of the moving object to the recommended spot extracted in the recommended spot extractor 130 (step S140) and moves the process to step S150.

If there are the multiple recommended spots extracted in the recommended spot extractor 130, the guidance route calculator 140 sequentially calculates the guidance route to each of all the recommended spots.

The branch point detector 150 detects the branch point based on the guidance route calculated in step S140 (step S150) and moves the process to step S160.

If there are multiple guidance routes corresponding to the multiple recommended spots calculated by the guidance route calculator 140, the branch point detector 150 detects the branch point for each of all guidance routes.

The required time acquisition unit 160 calculates the time required for the moving object to arrive at the branch point detected in step S150 (step S160) and moves the process to step S170.

If there are the multiple branch points detected by the branch point detector 150, the required time acquisition unit 160 calculates the required time for the moving object to arrive at each of all the branch points.

The controller 180 determines the information provision timing for each recommended spot, transmits the spot information for each recommended spot to the provider 170 at this information provision timing (step S170), and terminates the process.

As described above, when the multiple recommended spots are extracted in the recommended spot extractor 130 and the multiple branch points are detected in the branch point detector 150, the controller 180 of the information providing device 100 according to the present embodiment prioritize providing information on recommended spots to be guided by branching off the branch point with the time required from the current position of the moving object to the branch point is short.

In addition, the controller 180 determines the information provision start timing based on the time required to travel from the current location to the branch point and the information provision time, which is the time required to provide the spot information of the recommended spot, so that the provision of the spot information of the recommended spot can be completed before the moving object arrives at the branch point to the recommended spot.

In other words, the controller 180 calculates the estimated branch point arrival time at which the branch point is expected to be reached based on the time required from the current position to the detected branch point and the current time, and determines the information provision start time as the time that is backward from the calculated estimated branch point arrival time by the information provision time.

This allows the provision of information on the recommended spots to be completed by the time the moving object arrives at the branch point for the recommended spot.

The information providing device 100 provides the spot information in order from the recommended spots guided by the branch points where the time required from the current position of the moving object to the branch point is short.

In other words, if the spot information on the multiple recommended spots is provided to the occupant of the moving object at once, a driver of the moving object may concentrate on the spot information and may not be able to concentrate on driving. Therefore, the information providing device 100 provides the spot information for each recommended spot in order from the recommended spots guided by the branch points where the time required from the current position of the moving object to the branch point is short.

This allows the driver of the moving object to concentrate on driving since the spot information is provided sequentially starting from the recommended spots with less time to spare before a user decides to stop by, and spot information for multiple recommended spots is not provided at one time.

The information provision time includes at least the time required for the provision of the spot information and the time required for the occupant to consider whether to visit the recommended spot.

In other words, if the occupant of the moving object to which the spot information of the recommended spot is provided passes through the branch point to the recommended spot while the occupant is considering visiting the recommended spot, the information providing device 100 will not be able to smoothly go to the recommended spot. Therefore, the information providing device 100 determines the information provision start timing so that the provision of the spot information on the recommended spot and the consideration of whether to visit the recommended spot can be completed by the time the moving object reaches the branch point.

This allows the occupant of the moving object to decide whether to visit the recommended spot before arriving at the branch point to the recommended spot, and when they decide to visit the recommended spot, they can smoothly head to the recommended spot.

Even if the information providing device 100 is not equipped with a display to show the spot information and so on, the occupant of the moving object can fully understand the spot information and decide whether to visit the recommended spot, since the time for providing information through the voice guidance is secured.

In addition, a unique information provision time is set for each recommended spot.

In other words, since the time required for the voice guidance for each recommended spot is different for each recommended spot, the controller 180 sets the total time required for the voice guidance for each recommended spot and the time required for the occupant to consider whether to visit the recommended spot as the information provision time.

This allows the occupant of the moving object to complete the provision of information and a decision to visit the recommended spot before arriving at the branch point to the recommended spot, and can smoothly proceed to the recommended spot when the occupant decides to visit the recommended spot.

If the guidance route calculated by the guidance route calculator 140 is the route that leads the moving object back to the road it has been traveling on, the branch point detector 150 of the information providing device 100 according to the present embodiment does not detect the branch point corresponding to the guidance route.

As a result, only spot information on recommended spots that can be visited without changing the direction of travel on the road the moving object is currently travelling is provided, so that when the occupant of the moving object decides to visit the recommended spot, they can smoothly head for the recommended spot.

In addition, when the controller 180 of the information providing device 100 according to the present embodiment detects the multiple recommended spots for which the guidance route that branches at the same branch point is calculated, the information provision start timing based on the time required from the current position of the moving object to the branch point and the total time for the information provision time for each recommended spot.

In other words, when the multiple recommended spots are detected that are guided by branching off from the same branch point, the controller 180 determines the information provision start timing so that the provision of the spot information for the multiple recommended spots and the consideration of whether to visit the recommended spots by the occupant can be completed by the time the moving object reaches the branch point.

As a result, even if the multiple recommended spots are detected that are guided by branching off from the same branch point, the provision of information on the multiple recommended spots and the consideration of whether to visit each of the recommended spots can be completed before the arriving at the branch point to the recommended spots, so that when the occupant of the moving object decides to visit the recommended spot, they can smoothly head for the recommended spot.

If the multiple recommended spots are detected for which the guidance route that branches at the same branch point is calculated, the controller 180 of the information providing device 100 according to the present embodiment prioritize providing the spot information for the recommended spot with the shorter distance of the guidance route from the branch point to the recommended spot.

This allows the spot information of recommended spots that are located at the position where the travel distance from the branch point is short and the occupant of the moving object can easily stop by to be provided first.

Variation 1

Although the configuration of the information providing device 100 and the information processing method have been described, the information providing device 100 may be realized by installing an application software that executes the information provision method described above on a smartphone carried by the user.

This allows information on recommended spots to be provided to the user moving with the smartphone.

The application software that executes the information provision method described above may be incorporated into the software of a navigation device installed in the moving object (such as a motorcycle or automobile) to realize the information providing device 100.

This allows the navigation device to provide information on recommended spots and route guidance to the recommended spots.

Variation 2

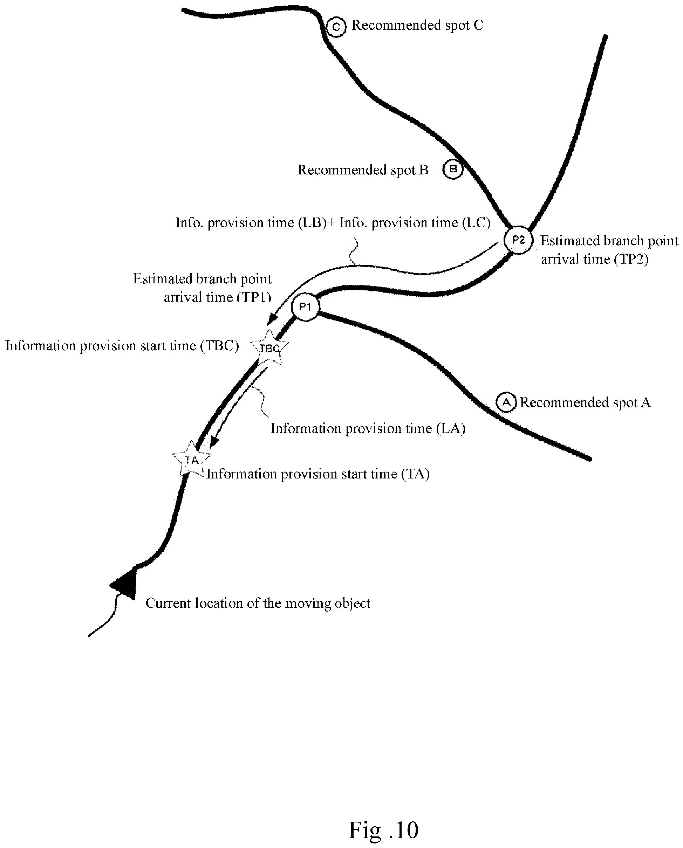

As illustrated in Fig. 10, in a situation where the recommended spot A, for which the guidance route is calculated by branching off the branch point P1, and the recommended spots B and C, for which the guidance route is calculated by branching off the branch point P2, are detected, when the information provision start time (TBC) is earlier than the estimated branch point arrival time at the branch point P1 (TP1), the information provision time for recommended spot A (TA) is set to the time that is backward by the information provision time (LA) from the information provision start time (TBC).

In other words, if the controller 180 starts providing information on the recommended spot A from the time that is backward by the information provision time (LA) from the expected branch point arrival time (TP1), the information provision time (LA) cannot be completed by the information provision start time (TBC), and as a result, the information provision of the recommended spots B and C cannot be completed by the time the moving object arrives at the branch point P2.

To avoid this, the information provision time for recommended spot A (TA) is set to the time that is backward by the information provision time (LA) from the information provision start time (TBC).

This allows the information provision of the recommended spot A to be completed by the time the moving object arrives at the branch point P1 for the recommended spot A. Furthermore, the information provision of the recommended spots B and C can be completed by the time the moving object arrives at the branch point P2 for the recommended spots B and C.

In other words, according to the present variant, when presenting the spot information for the multiple recommended spots that branch off and head for each of multiple consecutive branch points, even if the travel time of the moving object between the branch points is shorter than the time required to provide the spot information, by the time the moving object reaches the target branch point, spot information for the multiple recommended spots can be presented, and the occupant of the moving object can decide whether to visit the recommended spots before the moving object reaches the target branch point.

Variation 3

Since the processing of the recommended spot extractor 130, the guidance route calculator 140, the branch point detector 150, the required time acquisition unit 160, and the controller 180 of the information providing device 100 described above is a high-speed arithmetic process, the processing may be performed on a server.

This reduces a power consumption of the information providing device 100 since the high-speed arithmetic processing is performed on the server.

When a portable terminal such as the smartphone that operates on a secondary battery as the information providing device 100, a continuous operating time of the portable terminal can be extended since the power consumption of the portable terminal can be reduced.

The examples of the present invention have been described above in detail with reference to the drawings. However, specific configuration of the invention is not limited to the examples, and other designs may be included without departing from the scope of the invention.

[Explanation of the Reference Numerals]

100: Information providing device
110: Communicator
120: Current location acquisition unit
130: Recommended spot extractor
140: Guidance route calculator
150: Branch point detector
160: Required time acquisition unit
170: Information provider
180: Controller
200: Recommended spot server
N: Network

## Claims

1. An information providing device comprising:

   a current position acquisition unit that acquires a current position of a moving object;
   a recommendation spot extractor that extracts recommended spots that exist within a predetermined range from the current position and that are recommended to be visited by an occupant of the moving object;
   a guidance route calculator that calculates a guidance route from the current position to the recommended spot;
   a branch point detector that detects a branch point where a road on which the moving object is expected to travel and the guidance route branch;
   a required time acquisition unit that acquires required time information regarding a required time for the moving object to arrive at the branch point; and
   a controller that provides spot information to the occupant at least by voice at an information provision start timing determined based on the required time and an information provision time, which is a time required to provide the spot information of the recommended spot,
   wherein the controller, upon detecting multiple branch points corresponding to multiple recommended spots by the branch point detector, determines the information provision start timing for each spot information so that the provision of the spot information of the recommended spots corresponding to the guidance route branching from the branch point with a shorter required time is prioritized.

2. The information providing device according to claim 1,
   wherein the information provision time includes at least the time required for a voice guidance of the spot information and the time required for the occupant to consider whether to visit the recommended spot.

3. The information providing device according to claims 1 or 2,
   wherein the information provision time is set to a unique time for each recommended spot.

4. The information providing device according to claim 3,
   wherein the branch point detector does not detect the branch point corresponding to the guidance route if the guidance route is a route that leads back to the road on which the moving object has traveled.

5. The information providing device according to claim 4,
   wherein the controller, upon detecting the multiple recommended spots for which the guidance routes branching at the same branch point are calculated, determines the information provision start timing based on the required time and, a total time of the information provision time for each of the recommended spots.

6. The information providing device according to claim 5,
   wherein the controller, upon detecting the multiple recommended spots for which the guidance routes branching at the same branch point are calculated, prioritizes providing the spot information of the recommended spot with a shorter distance from the branch point to the recommended spot.

7. An information providing method of an information providing device comprising a current position acquisition unit, a recommended spot extractor, a guidance route calculator, a branch point detector, a required time acquisition unit, and a controller, comprising the steps of:

a first step in which the current position acquisition unit acquires a current position of a moving object.;

a second step in which the recommended spot extractor extracts recommended spots that exist within a predetermined range from the current position and that are recommended to be visited by an occupant of the moving object;

a third step in which the guidance route calculator calculates a guidance route from the current position to the recommended spot;

a fourth step in which the branch point detector detects a branch point where a road on which the moving object is expected to travel and the guidance route branch;

a fifth step in which the required time acquisition unit acquires required time information regarding a time required for the moving object to arrive at the branch point;

a sixth step in which the controller provides spot information to the occupant at least by voice at an information provision start timing determined based on a required time and an information provision time, which is the time required to provide the spot information of the recommended spot; and

a seventh step in which when a multiple branch points corresponding to multiple recommended spots are detected by the branch point detector, the controller determines the information provision start timing for each spot information, so that a provision of the spot information of the recommended spots corresponding to the guidance route branching from the branch point with a shorter required time is prioritized.

8. A program which causes a computer to execute an information providing method of an information providing device comprising a current position acquisition unit, a recommended spot extractor, a guidance route calculator, a branch point detector, a required time acquisition unit, and a controller, comprising the steps of:

a first step in which the current position acquisition unit acquires a current position of a moving object.;

a second step in which the recommended spot extractor extracts recommended spots that exist within a predetermined range from the current position and that are recommended to be visited by an occupant of the moving object;

a third step in which the guidance route calculator calculates a guidance route from the current position to the recommended spot;

a fourth step in which the branch point detector detects a branch point where a road on which the moving object is expected to travel and the guidance route branch;

a fifth step in which the required time acquisition unit acquires required time information regarding a time required for the moving object to arrive at the branch point;

a sixth step in which the controller provides spot information to the occupant at least by voice at an information provision start timing determined based on a required time and an information provision time, which is the time required to provide the spot information of the recommended spot; and

a seventh step in which when multiple branch points corresponding to multiple recommended spots are detected by the branch point detector, the controller determines the information provision start timing for each spot information, so that a provision of the spot information of the recommended spots corresponding to the guidance route branching from the branch point with a shorter required time is prioritized.

9. A recording medium, which is computer-readable and non-transitory, containing a program which causes a computer to execute an information providing method of an information providing device comprising a current position acquisition unit, a recommended spot extractor, a guidance route calculator, a branch point detector, a required time acquisition unit, and a controller, comprising the steps of:

a first step in which the current position acquisition unit acquires a current position of a moving object.;

a second step in which the recommended spot extractor extracts recommended spots that exist within a predetermined range from the current position and that are recommended to be visited by an occupant of the moving object;

a third step in which the guidance route calculator calculates a guidance route from the current position to the recommended spot;

a fourth step in which the branch point detector detects a branch point where a road on which the moving object is expected to travel and the guidance route branch;

a fifth step in which the required time acquisition unit acquires required time information regarding a time required for the moving object to arrive at the branch point;

a sixth step in which the controller provides the spot information to the occupant at least by voice at an information provision start timing determined based on a required time and an information provision time, which is the time required to provide the spot information of the recommended spot; and

a seventh step in which when multiple branch points corresponding to multiple recommended spots are detected by the branch point detector, the controller determines the information provision start timing for each spot information, so that a provision of the spot information of the recommended spots corresponding to the guidance route branching from the branch point with a shorter required time is prioritized.

Fig. 1

| Recommended spot server 200 storage information | Description |
|---|---|
| Recommended spot name | Names of recommended sightseeing/entertainment/dining/fashion/photo spots, etc. |
| Location information (address/latitude-longitude info) | Information to be referred to when determining whether the recommended spot is within a predetermined range from the current location |
| Recommended point information | Textual information about the recommended spot summary (Reason why it is listed as a recommended spot) |
| Recommended spot voice guidance info (playback data/time info) | Voice guidance information explaining recommended points for each recommended spot |
| ⋮ | |

Fig. 2

EP 4 664 072 A1

Recommended spot B ⓑ

Guidance route B

ⓐ Recommended spot A

Guidance route A

Current location of the moving object

Fig. 3

Recommended spot B Ⓑ

Branch point P2 Ⓟ2

Guidance route B

Branch point P1 Ⓟ1

Ⓐ Recommended spot A

Guidance route A

Current location of the moving object

Fig. 4

Recommended spot B

Estimated branch point arrival time (TP2)

P2

TB

Information provision time (LB)

Information provision start time (TB)

Estimated branch point arrival time (TP1)

P1

A Recommended spot A

Information provision time (LA)

TA Information provision start time (TA)

Current location of the moving object

Fig .5

Current time=09:57

| Info. Prov. order | Branch point | Recommended spots corresponding to branch points | Required time to branch point | Estimated branch point arrival time | Time required for voice guidance | Occupant consideration time | Information provision time | Information provision start time |
|---|---|---|---|---|---|---|---|---|
| 1 | P1 | Recommended spot A | T1=3 mins | TP1=10:00 | 20 sec. | 1 min. | LA=1 min. 20 sec. | TA=9:58:40 |
| 2 | P2 | Recommended spot B | T2=8 mins | TP2=10:05 | 30 sec. | 1 min. | LB= 1 min. 30 sec. | TB=10:03:30 |

Fig. 6

Recommended spot C Ⓒ

Recommended spot B Ⓑ

Estimated branch point arrival time (TP2) P2

Information provision start time (TBC) TBC

Info. provision time (LB) + Info. provision time (LC)

Estimated branch point arrival time (TP1)

P1 Ⓐ Recommended spot A

Information provision time (LA)

TA Information provision start time (TA)

Current location of the moving object

Fig. 7

Current time=09:57

| Info. Prov. order | Branch point | Recommended spots corresponding to branch points | Required time to branch point | Estimated branch point arrival time | Time required for voice guidance | Occupant consideration time | Information provision time | Information provision start time |
|---|---|---|---|---|---|---|---|---|
| 1 | P1 | Recommended spot A | T1=3 mins | TP1=10:00 | 20 sec. | 1 min. | LA=1 min. 20 sec. | TA=9:58:40 |
| 2 | P2 | Recommended spot B | T2=8 mins | TP2=10:05 | 30 sec. | 1 min. | LB= 1 min. 30 sec. | TBC=10:01:30 (TC=10:03:00) |
| 3 | | Recommended spot C | | | 40 sec. | 1 min. 20 sec. | LC= 2 min. 0 sec. | |

Fig. 8

EP 4 664 072 A1

START

Acquire current location — S110

Extract recommended spot — S120

Recommended spot exists? — S130

NO

YES

Calculate guidance route — S140

Detect branch point — S150

Calculate required time to arrive at the branch point — S160

Determine information provision timing, provide spot information — S170

END

Fig .9

Recommended spot C

Recommended spot B

Info. provision time (LB)+ Info. provision time (LC)

Estimated branch point
arrival time (TP1)

Estimated branch point
arrival time (TP2)

Information provision start time (TBC)

Recommended spot A

Information provision time (LA)

Information provision start time (TA)

Current location of the moving object

Fig .10

## INTERNATIONAL SEARCH REPORT

International application No.

**PCT/JP2023/021248**

| A. | CLASSIFICATION OF SUBJECT MATTER |
|---|---|

*G01C 21/26*(2006.01)i
FI: G01C21/26 C

According to International Patent Classification (IPC) or to both national classification and IPC

| B. | FIELDS SEARCHED |
|---|---|

Minimum documentation searched (classification system followed by classification symbols)

G01C21/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2015-21836 A (DENSO CORPORATION) 02 February 2015 (2015-02-02) fig. 8, paragraphs [0020], [0023], [0055]-[0084] | 1-4, 7-9 |
| A | entire text, all drawings | 5-6 |
| Y | JP 2014-25805 A (PIONEER CORP.) 06 February 2014 (2014-02-06) paragraph [0071] | 1-4, 7-9 |
| Y | JP 2017-199122 A (NTT DOCOMO, INC.) 02 November 2017 (2017-11-02) paragraph [0090] | 2-4 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 July 2023** | **18 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/021248**

| Patent document cited in search report | | | Publication date (day/month/year) | Patent family member(s) | Publication date (day/month/year) |
|---|---|---|---|---|---|
| JP | 2015-21836 | A | 02 February 2015 | (Family: none) | |
| JP | 2014-25805 | A | 06 February 2014 | (Family: none) | |
| JP | 2017-199122 | A | 02 November 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020165690 A